# EUROPEAN PATENT SPECIFICATION

(11) **EP 3 778 310 B1**
(45) Date of publication and mention of the grant of the patent: **13.07.2022**
(21) Application number: 19780625.0
(22) Date of filing: 21.03.2019
(51) Int. Cl.: B60R 21/207, B60R 21/2338

(54) **SIDE AIRBAG DEVICE**
SEITENAIRBAGVORRICHTUNG
DISPOSITIF DE TYPE COUSSIN DE SÉCURITÉ GONFLABLE LATÉRAL

(30) Priority: 05.04.2018 JP 2018073510
(43) Date of publication of application: 17.02.2021
(73) Proprietor: Autoliv Development AB, 44783 Vargarda (SE)
(72) Inventor: FUMA, Makoto, Yokohama-shi, Kanagawa 222-8580 (JP); KOBAYASHI, Yuto, Yokohama-shi, Kanagawa 222-8580 (JP)
(74) Representative: Müller Verweyen
(86) International application number: PCT/JP2019/011950
(87) International publication number: WO 2019/193987

(56) References cited:
- WO-A1-2014/033820
- DE-A1-102012 203 411
- JP-A- 2012 192 871
- JP-A- 2014 108 740
- US-A- 5 730 464
- US-A1- 2015 217 714

## Description

### TECHNICAL FIELD

The present invention relates to a side airbag device equipped in a vehicle seat.

### BACKGROUND

In recent years, it has become customary to provide one or a plurality of airbags in a vehicle in order to improve vehicle collision safety (passive safety). These airbags include, for example, various forms such as: a so-called driver airbag which is deployed from near the center of the steering wheel so as to protect the driver; a curtain airbag which is deployed downward on an inner side of a window of an automobile so as to protect an occupant during a collision in the lateral direction of a vehicle, as well as when overturning and during rollover accidents; and a side airbag which is deployed to a side of the occupant so as to protect the occupant upon impact in the lateral direction of the vehicle.

The side airbag is stowed in a side support part of a seat so as to deploy in a forward direction and upward direction therefrom. This side airbag has a sizeable length in a vertical direction from the vicinity of the seat surface to the vicinity of the headrest in order to protect the range from the waist to the head of an occupant.

However, when the length (height) of the airbag in the vertical direction increases, deployment posture in the vertical direction is not easily maintained. In other words, it is difficult for the airbag to stand on its own. As a result, an upper portion of the deployed airbag may tilt in a direction away from the occupant. In particular, a so-called far side airbag, which is deployed on a side opposite from the door side (center of the vehicle), does not have anything for support, such as the door, and therefore, the deployed airbag is more likely to incline. When the side airbag cannot maintain deployment posture and inclines, the head of the occupant falls in the sideways direction, and in the end makes contacts with the upper part of the side airbag. Thus, restraining of the head of the occupant is delayed and may exacerbate an injury value in the vicinity of the head and neck. Documents US 2015/217714 A1 and DE 10 2012 203 411 A1 both disclose a side airbag device comprising an external tether to control the length of the deployment in the vertical direction and a pleat formed by folding a base material portion with DE 10 2012 203411 A1 disclosing a vehicle seat according to the preamble of claim 1.

### SUMMARY OF THE INVENTION

### Problem to be Solved by the Invention

In view of the foregoing, an object of the present invention is to provide a side airbag device that can quickly and reliably restrain the head of an occupant by appropriately controlling deployment shape of an airbag.

### Means for Solving the Problem

In order to resolve the problem described above, the present invention is a side airbag device equipped in a vehicle seat, including: an airbag that restrains an occupant by deploying from the side part of the seat; and an external tether that extends in the vertical direction of the airbag on an outer surface of the airbag on the occupant side. Furthermore, the external tether is configured so as to control the length of deployment in the vertical direction of the airbag. Furthermore, a pleat formed by folding a base material portion forming the airbag is provided on a surface of the base material portion on an opposite side from the occupant. The external tether is a structure having: an upper end part connected to an upper part of the airbag; and a lower end part connected to a lower part of the airbag. The upper end part of the external tether is provided to include a corner part between the front edge and upper edge of the airbag, and the lower end part of the external tether can be secured to the seat frame of the seat in the vicinity of an inflator that is inside the airbag. Herein, "pleat" refers to a structure where a portion of the base material of the airbag is folded in a roughly parallel manner, and the fold direction length in this area is shortened, but widens due to the pressure of the airbag.

When the airbag deploys, the length of the base material in the vertical direction on the occupant side is controlled by the external tether. On the other hand, the widening of the pleat on the surface on the opposite side from the occupant causes the airbag to curve in a manner where the occupant side is concave. The body of the occupant seated in the seat is positioned with the shoulder portion protruding most in the lateral direction (sizeable width) and the head to the inside. Therefore, with the deployed airbag curved into a concave shape on the occupant side such that the airbag has a shape that runs along the body of the occupant. Thus, the occupant can be reliably and appropriately restrained without any localized pressure concentrations. In particular, the upper part of the airbag gets close to the head of the occupant; therefore, the vicinity of the head can be quickly restrained.

Furthermore, the external tether causes the surface of the airbag on the occupant side to push out in the vertical direction stabilizing the deployment shape of the airbag and improving restraining performance of the occupant. If the external tether is not present, the deployed airbag more readily inclines in a direction away from the occupant, resulting in unstable restraining performance of the occupant.

The external tether is arranged largely over an entire region of the airbag in the vertical direction, such that the deployment shape of the airbag can be controlled over the entire region in the vertical direction. Furthermore, the adjustment range of the airbag base material in the vertical direction can be enlarged. In other words, the level of curvature of the deployed airbag can be increased (curvature can be increased) by reducing the length of the external tether. Conversely, the level of curvature of the deployed airbag can be reduced (curvature can be reduced) by increasing the length of the external tether.

Thus, the upper end part of the external tether is provided across the forward corner part, and the lower end part of the external tether is connected in the vicinity of the inflator, such that the external tether extends along a direction in which expansion gas flows. Thereby, the shape (posture) of the deployed airbag, and particularly the length in a front-rear direction is easy to control.

A fold forming the pleat can be configured to extend in a direction orthogonal to the vertical direction. By aligning the direction in which the external tether extends and the direction in which the pleat widens, the curve effect on the airbag becomes noticeable.

A longitudinal direction of the external tether and the direction in which the fold of the pleat extends can be provided essentially orthogonal to each other. Herein, "essentially orthogonal" is not limited to cases where the directions strictly intersect at a 90° angle, but also includes cases where the directions are orthogonal at an angle slightly deviating from 90°.

The external tether can be arranged so as to contact the occupant during deployment of the airbag. The external tether contacts the occupant on the inner side surface of the airbag, and the pleat widens on the opposite side at a position corresponding to the external tether, such that the curvature of the airbag does not collapse significantly due to pressure from the occupant.

An inner tether that controls width of deployment of the airbag in a left-right direction can be provided inside the airbag. The width of the airbag is controlled by the inner tether, and the deployment shape (curvature) of the entire airbag is regulated with the combination of the external tether and pleat, such that an optimal deployment posture and deployment shape of the airbag can be achieved.

Two of the inner tethers can be arranged at a predetermined interval in the vertical direction, and the pleat can be formed at an appropriate position between the two inner tethers. The pleat is formed within the range of the two inner tethers such that the curvature due to the widening pleat can be achieved at the most effective position in the middle portion of the airbag.

The inner tether and the external tether can be structures extending in directions essentially orthogonal to each other. A synergistic effect of the inner tether controlling the width of the airbag and the external tether controlling the length of the airbag in the vertical direction can be maximized. In other words, the deployed airbag can be reliably curved without twisting.

A plurality of the pleats can be formed. The plurality of pleats enables a large adjustment range of the base material forming the airbag in the vertical direction, and improves the degree of freedom in the level of curvature (curvature) of the airbag.

The side airbag device is provided on the side part of the vehicle seat on the side opposite from the vehicle door (far side) such that an effect thereof can be sufficiently demonstrated. When the side airbag is installed on the side part of the seat on the vehicle door side (near side), the deployed airbag is supported to some extent by the vehicle door, and therefore, the prescribed deployment shape is easy to maintain. On the other hand, when the side airbag is installed on the side part of the seat opposite from the vehicle door (far side), the posture of airbag normally readily collapses due to the absence of something to support the deployed airbag. Therefore, the significance of the present invention is greater in the case of a far side airbag than a near side airbag.

In the specification, claims, and drawings, the directions shall be defined as follows. When an occupant is seated in a normal seating posture such that a large portion of the back of the occupant contacts the seat back, the direction that the torso of the occupant faces shall be referred to as "front", and an opposite direction thereof shall be referred to as "rear". Furthermore, a right-hand direction of the occupant shall be referred to as "right", and a lefthand direction shall be referred to as "left", which are directions orthogonal to the front-rear direction. In the left-right direction, an occupant side of the deployed airbag shall be referred to as "inside", and an opposite side from the occupant shall be referred to as "outside".

The "vertical direction" is not limited to, for example, an up-down direction indicating a top-bottom direction when the vehicle is considered a box, or a completely vertical direction, but is also a concept including a direction inclined to a certain degree from the up-down direction or vertical direction, or the longitudinal direction of the airbag. Furthermore, when a straight line is drawn between any two points on an outer edge of the surface of the airbag in a condition where the airbag prior to folding for stowing is laid flat, the "longitudinal direction" of the airbag includes a direction where the straight line is longest. The "width direction" of the airbag refers to the thickness direction of the airbag in the deployed condition, and for example, refers to the "left-right direction" as seen from the perspective of a normally seated occupant.

The side airbag according to the present invention has a particularly significant effect as a type of side airbag that deploys to a vehicle center side of the seat. This type of airbag is referred to as a far side airbag, front center airbag, rear center airbag, and the like. Needless to say, the side airbag according to the present invention may also be applied in so-called near side airbags that deploy to the door side (outside) of the seat.

### BRIEF DESCRIPTION OF THE DRAWINGS

FIG. 1 is a perspective view primarily illustrating an external shape of a vehicle seat according to the present invention, with an illustration of a side airbag device omitted.
FIG. 2 is a schematic side surface view of the vehicle seat according to the present invention, illustrating a condition where the side airbag device is stowed therein.
FIG. 3 is a schematic side surface view of the vehicle seat according to the present invention, illustrating a condition where the airbag is deployed.
FIG. 4 is a plan view illustrating a structure of an airbag prior to folding used in a side airbag device according to an embodiment of the present invention, where (A) illustrates a condition viewed from the opposite side of the occupant, and (B) illustrates the condition viewed from the occupant side.
FIG. 5 (A) is a cross-sectional view in the A-A direction of FIG. 4, illustrating a condition before the airbag is deployed. FIG. 5 (B) is a cross-sectional view in the A-A direction of FIG. 4, illustrating a condition where the airbag is deployed.
FIG. 6 is a schematic view illustrating a condition where the side airbag according to an embodiment of the present invention is deployed, illustrating a positional relationship between the side airbag and occupant.
FIG. 7 is a plan view illustrating a structure of an airbag prior to folding used in a side airbag device according to another embodiment of the present invention, illustrating the condition viewed from the occupant side.
FIG. 8 is a view corresponding to the cross-section in the A-A direction of FIG. 4, illustrating a condition before the airbag is deployed.

### Description of the Preferred Embodiment

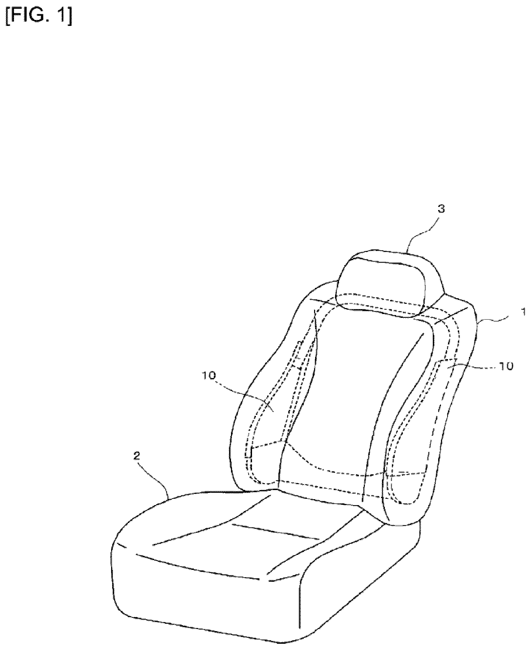

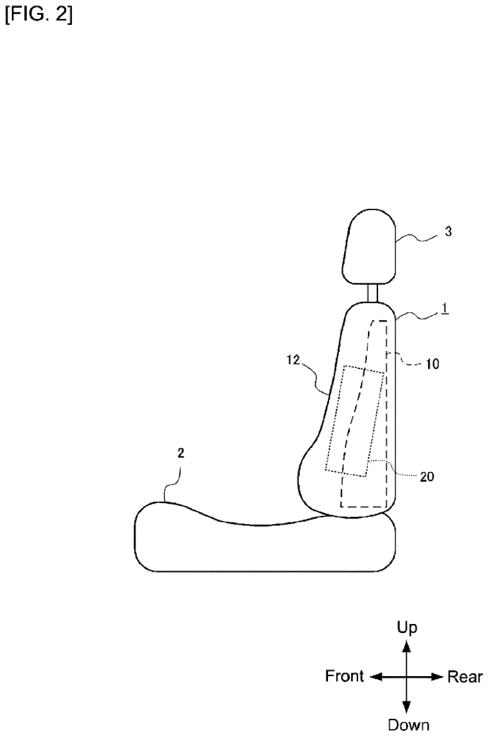

A side airbag device seat according to the embodiments of the present invention will be described with reference to the accompanying drawings. FIG. 1 is a perspective view primarily illustrating an external shape of a vehicle seat, with an illustration of an airbag device (20) omitted. FIG. 2 is a schematic side surface view of the vehicle seat according to the present invention, illustrating a condition where the airbag device 20 is stowed in a side surface away from the door (far side) of a right side seat (for example, driver's seat or front passenger seat) as viewed from the inside in a vehicle width direction.

As illustrated in FIGS. 1 and 2, seen as the location, the vehicle seat according to the present example is configured by: a seat cushion 2 of a part on which an occupant is seated; a seat back 1 forming a backrest; and a headrest 3 connected to the upper end of the seat back 1. Note that reference 10 indicates a side frame extending in a vertical direction of the seat.

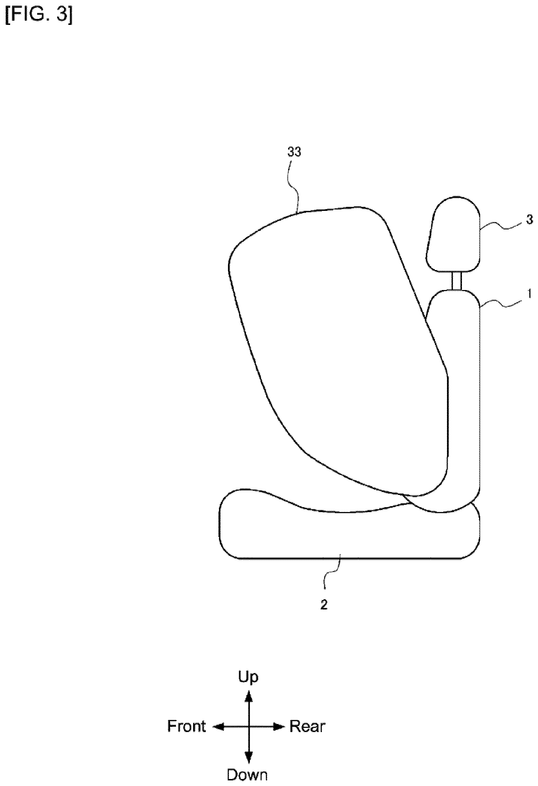

FIG. 3 is a schematic side surface view of the vehicle seat according to the present invention, illustrating a condition where the airbag is deployed. As illustrated in FIG. 3, an airbag 33 deploys in a forward direction and upward direction of a side support part 12.

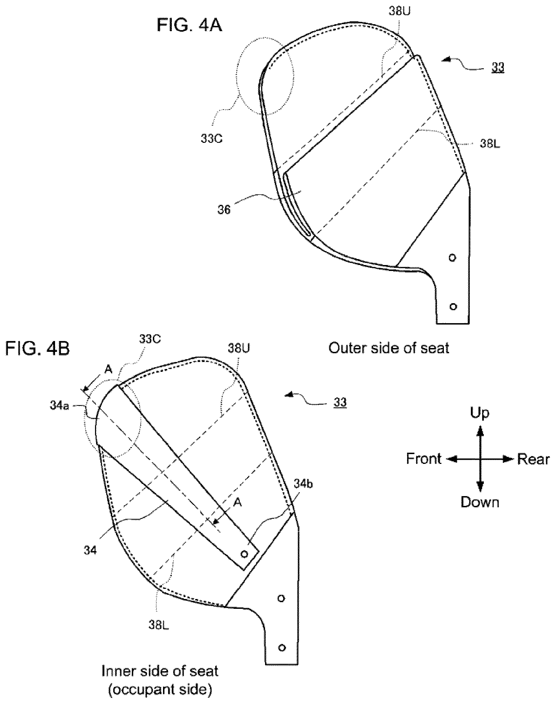

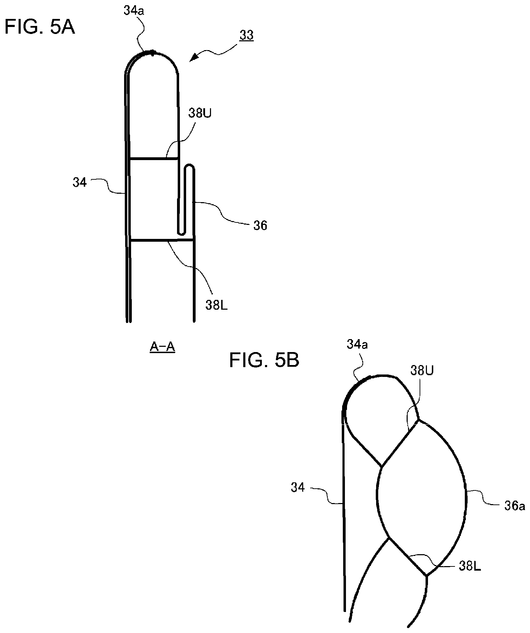

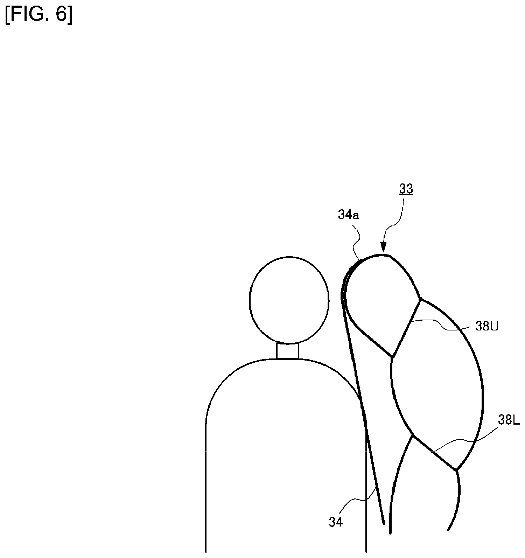

FIG. 4 is a plan view illustrating a structure prior to folding the airbag 33 used in a side airbag device according to an embodiment of the present invention, where (A) illustrates the condition viewed from an opposite side of an occupant, and (B) illustrates the condition viewed from the occupant side. FIG. 5 (A) is a cross-sectional view in the A-A direction of FIG. 4, illustrating a condition before the airbag 33 is deployed. FIG. 5 (B) is a cross-sectional view in the A-A direction of FIG. 4, illustrating a condition where the airbag 33 is deployed. FIG. 6 is a schematic view illustrating a condition where the side airbag 33 according to an embodiment of the present invention is deployed, illustrating a positional relationship between the side airbag 33 and occupant.

The side airbag device according to the present embodiment is provided with: the airbag (cushion) 33 that restrains an occupant by deploying from the side support part 12 of the seat; and an external tether 34 that extends in the vertical direction on a surface of the airbag 33 on the occupant side. The external tether 34 is configured so as to control deployment length in the vertical direction of the airbag 33. Furthermore, a pleat 36 formed by folding the base material portion forming the airbag 33 is provided on the surface of the base material portion on the side opposite from the occupant.

A fold forming the pleat 36 extends in a direction roughly orthogonal to the longitudinal direction of the external tether 34. The external tether 34 has an upper end part 34a connected to an upper part of the airbag 33 and a lower end part 34b connected to a lower part of the airbag 33. Furthermore, the external tether 34 contacts the occupant during deployment of the airbag 33.

Herein, the upper end part 34a of the external tether 34 is provided including a corner part 33C between a front edge and an upper edge of the airbag 33. Furthermore, the lower end part 34b of the external tether 34 is secured to the seat frame provided in the vicinity of an inflator that is inside the airbag 33, and preferably in the vicinity in front of the inflator. Thus, the upper end part 34a of the external tether 34 is provided straddling a forward corner part 33C, and the lower end part 34b of the external tether 34 is connected in the vicinity of the inflator, such that the external tether 34 extends along a direction in which expansion gas flows. Thereby, the shape (posture) of the deployed airbag 33, and particularly the length in a front-rear direction is more readily controlled.

Inner tethers 38U, 38L that control width of deployment of the airbag 33 in the left-right direction are provided inside the airbag 33. The inner tethers 38U, 38L are formed using the same fabric as the airbag 33 and are arranged at a prescribed interval in the vertical direction. The pleat 36 is formed at an appropriate position between the two inner tethers 38U, 38L. Furthermore, in accordance therewith, the inner tethers 38U, 38L and an external tether 34 are structures that extend in mutually orthogonal directions.

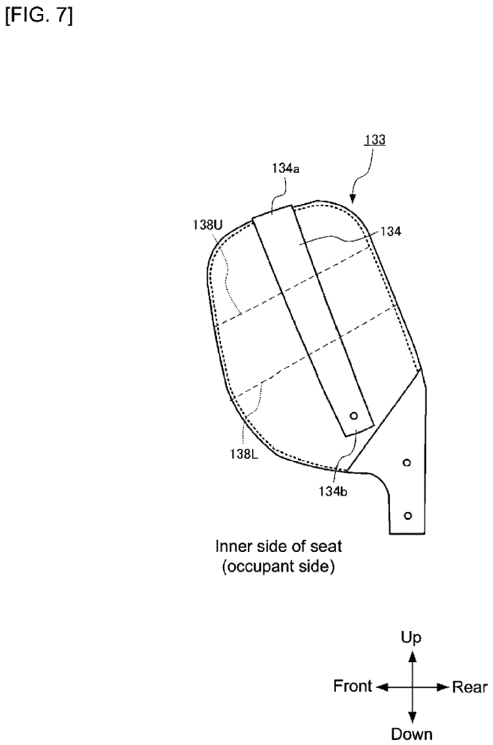

FIG. 7 is a plan view illustrating a structure prior to folding an airbag 133 used in a side airbag device according to another embodiment of the present invention, illustrating the condition as viewed from the occupant side. FIG. 7 corresponds to FIG. 4 (B) of the previously illustrated embodiment. Differing points include the direction of an external tether 134 and direction of inner tethers 138U, 138L. In the embodiment illustrated in FIG. 7, the external tether 134 extends in a direction closer to vertical than in FIG. 4 (B). Furthermore, the inner tethers 138U, 138L extend in a near-horizontal direction.

In the present invention, when the airbags 33, 133 are deployed, the length of the base material in the vertical direction on the occupant side is controlled by the external tethers 34, 134. On the other hand, the widening of the pleat 36 on the surface on the opposite side from the occupant causes the airbags 33, 133 to curve in a manner where the occupant side is concave, as illustrated in FIG. 5 (B) and FIG. 6. The body of the occupant seated in the seat is positioned with a shoulder portion protruding most in the lateral direction (sizeable width) and the head to the inside. Therefore, the airbags 33, 133 are deployed curved into a concave shape on the occupant side such that the airbags 33, 133 have a shape that runs along the body of the occupant. Thus, the occupant can be reliably and appropriately restrained without any localized pressure concentrations. In particular, the upper part of the airbags 33, 133 gets close to the head of the occupant, and therefore, the vicinity of the head can be quickly restrained.

Furthermore, the external tethers 34, 134 cause the surface of the airbags 33, 133 on the occupant side to push out in the vertical direction stabilizing the deployment shape of the airbags 33, 133 and improving restraining performance of the occupant. If the external tether is not present, the deployed airbag more readily inclines in a direction away from the occupant, resulting in unstable restraining performance of the occupant.

With the present invention, the external tethers 34, 134 are primarily arranged across entire regions of the airbags 33, 133 in the vertical direction, such that the deployment shape of the airbags 33, 133 is controlled across the entire region in the vertical direction. Therefore, the adjustment range of the length of the base material part of the airbags 33, 133 in the vertical direction can be enlarged. In other words, the degree of curvature of the deployed airbags 33, 133 can be increased (curvature can be reduced) by shortening the length of external tethers 34, 134. Conversely, the degree of curvature of the deployed airbags 33, 133 can be reduced (curvature can be increased) by increasing the length of the external tether 34, 134 *[Translation note:* apparent error with "reduced" and "increased" in parentheses in original].

With the present invention, the fold forming the pleat 36 extends in a direction roughly orthogonal to the direction in which the external tethers 34, 134 extend (vertical direction). In other words, the direction in which the external tethers 34, 134 extend and direction in which the pleat 36 widens match, and thus the airbags 33, 133 can be reliably curved.

Furthermore, the external tethers 34, 134 contact the occupant during deployment of the airbags 33, 133. Therefore, the pleat 36 widens at a position corresponding to the external tethers 34, 134 on the opposite side, such that the curvature of the airbags 33, 133 do not collapse significantly due to pressure from the occupant.

Furthermore, the width of the airbags 33, 133 is controlled by the inner tethers 38U, 38L (138U, 138L), and the deployment shape (curvature) of the entire airbags 33, 133 is controlled using the combination of the external tethers 34, 134 and pleat 36, such that an optimal deployment posture and deployment shape of the airbags can be achieved.

Furthermore, the pleats 36 are formed within a range of the two inner tethers 38U, 38L (138U, 138L) provided inside the airbag 33, 133, such that the curvature based on the widening pleat 36 can be achieved at the most effective position in a middle portion of the airbag 33, 133.

Furthermore, the inner tethers 38U, 38L (138U, 138L) and external tethers 34, 134 extend in directions that are mutually orthogonal. Therefore, the synergistic effect of a function of controlling the width of the airbags 33, 133 and function of controlling the length of the airbags 33, 133 in the vertical direction can be maximized. In other words, the deployed airbags 33, 133 are reliably curved without twisting.

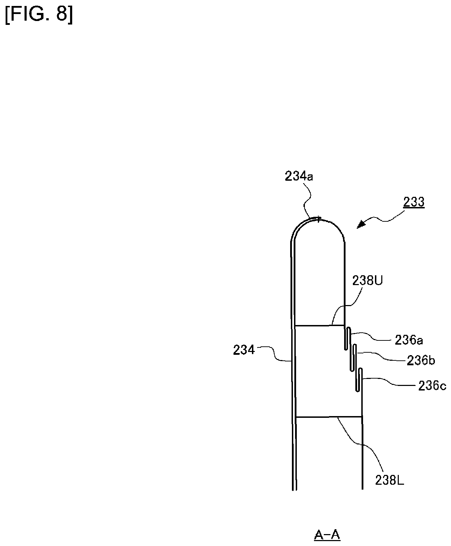

FIG. 8 is a view corresponding to the cross-section in the A-A direction of FIG. 4, illustrating a condition before the airbag is deployed. In the present embodiment, a plurality of pleats 236a, 236b, and 236c are formed. The plurality of pleats allows a large adjustment range of the base material forming an airbag 233 in the vertical direction, and improves the degree of freedom in the level of curvature (curvature) of the airbag 233.

The side airbag device according to the present embodiment is provided on a side part of a vehicle seat on the side opposite the vehicle door (far side) such that an effect thereof can be sufficiently demonstrated.

## Claims

1. A vehicle seat including a side airbag device, comprising:
an airbag (33,133,233) that restrains an occupant by deploying from a side part of the seat; and
an external tether (34,134) extending in a vertical direction of the airbag (33,133,233) on an outer surface of the airbag (33,133,233) on an occupant side; wherein:
the external tether (34,134) is configured so as to control the length of deployment in the vertical direction of the airbag (33,133,233), and
a pleat (36,236a,236b,236c) formed by folding a base material portion forming the airbag (33,133,233) is provided on a surface of the base material portion on a side opposite from the occupant, wherein
the external tether (34,134) has an upper end part (34a) connected to an upper part of the airbag (33,133,233) and a lower end part (34b) connected to a lower part of the airbag (33,133,233),
**characterized in that**
the upper end part (34a) of the external tether (34,134) is provided to include a corner part (33c) between the front edge and upper edge of the airbag (33,133,233), and the lower end part (34b) of the external tether (34,134) is secured to the seat frame of seat in the vicinity of an inflator that is inside the airbag (33,133,233).

2. The vehicle seat according to claim 1, wherein the fold forming the pleat (36,236a,236b,236c) extends in a direction orthogonal to the vertical direction.

3. The vehicle seat according to claim 2, wherein the longitudinal direction of the external tether (34,134) and the direction in which the fold of the pleat (36,236a,236b,236c) extends are provided essentially orthogonal to each other.

4. The vehicle seat according to any one of claims 1 to 3, wherein the external tether (34,134) is arranged so as to contact the occupant during airbag (33,133,233) deployment.

5. The vehicle seat according to any one of claims 1 to 4, wherein an inner tether (38U,38L,138U,138L) that controls the deployment width of the airbag (33,133,233) in the left-right direction is provided inside the airbag (33,133,233).

6. The vehicle seat according to claim 5, wherein:
two of the inner tethers (38U,38L,138U,138L) are arranged at a predetermined interval in the vertical direction, and
the pleat (36,236a,236b,236c) is formed at an appropriate position between the two inner tethers (38U,38L,138U,138L).

7. The vehicle seat according to claim 5 or 6, wherein the inner tether and the external tether (34,134) extend in directions essentially orthogonal to each other.

8. The vehicle seat according to any one of claim 1 to 7, wherein a plurality of the pleats (36,236a,236b,236c) are formed.

9. The vehicle seat according to any one of claims 1 to 8, wherein the side airbag device is provided on a side part of the vehicle seat on a side opposite from a vehicle door.

## Patentansprüche

1. Fahrzeugsitz mit einer Seitenairbagvorrichtung, umfassend:
einen Airbag (33,133,233), der einen Insassen durch Entfaltung von einem Seitenteil des Sitzes zurückhält; und
einen externen Haltegurt (34, 134), der sich in einer vertikalen Richtung des Airbags (33, 133, 233) auf einer Außenoberfläche des Airbags (33, 133, 233) auf einer Insassenseite erstreckt; wobei:
der externe Haltegurt (34, 134) so konfiguriert ist, dass er die Länge der Entfaltung in der vertikalen Richtung des Airbags (33, 133, 233) steuert, und
eine Falte (36, 236a, 236b, 236c), die durch Falten eines Basismaterialabschnitts, der den Airbag (33, 133, 233) bildet, gebildet wird, auf einer Oberfläche des Basismaterialabschnitts auf einer dem Insassen gegenüberliegenden Seite vorgesehen ist, wobei
der äußere Haltegurt (34, 134) einen oberen Endteil (34a), der mit einem oberen Teil des Airbags (33, 133, 233) verbunden ist, und einen unteren Endteil (34b), der mit einem unteren Teil des Airbags (33, 133, 233) verbunden ist, aufweist,
**dadurch gekennzeichnet, dass**
das obere Endteil (34a) des externen Haltegurts (34, 134) so vorgesehen ist, dass es ein Eckteil (33c) zwischen der Vorderkante und der Oberkante des Airbags (33, 133, 233) umfasst, und das untere Endteil (34b) des externen Haltegurts (34, 134) am Sitzrahmen des Sitzes in der Nähe einer Aufblasvorrichtung, die sich im Inneren des Airbags (33, 133, 233) befindet, befestigt ist.

2. Fahrzeugsitz nach Anspruch 1, wobei sich der die Falte (36, 236a, 236b, 236c) bildende Falz in einer Richtung orthogonal zur vertikalen Richtung erstreckt.

3. Fahrzeugsitz nach Anspruch 2, wobei die Längsrichtung des äußeren Haltegurts (34, 134) und die Richtung, in der sich der Falz der Falte (36, 236a, 236b, 236c) erstreckt, im Wesentlichen orthogonal zueinander vorgesehen sind.

4. Fahrzeugsitz nach einem der Ansprüche 1 bis 3, wobei der äußere Haltegurt (34, 134) so angeordnet ist, dass er den Insassen während der Entfaltung des Airbags (33, 133, 233) berührt.

5. Fahrzeugsitz nach einem der Ansprüche 1 bis 4, wobei im Inneren des Airbags (33, 133, 233) ein innerer Haltegurt (38U, 38L, 138U, 138L) vorgesehen ist, der die Entfaltungsbreite des Airbags (33, 133, 233) in Links-Rechts-Richtung steuert.

6. Fahrzeugsitz nach Anspruch 5, wobei:
zwei der inneren Haltegurte (38U, 38L, 138U, 138L) in einem vorbestimmten Abstand in vertikaler Richtung angeordnet sind, und
die Falte (36, 236a, 236b, 236c) an einer geeigneten Stelle zwischen den beiden inneren Haltegurten (38U, 38L, 138U, 138L) ausgebildet ist.

7. Fahrzeugsitz nach Anspruch 5 oder 6, wobei sich der innere Haltegurt und der äußere Haltegurt (34, 134) in Richtungen erstrecken, die im Wesentlichen orthogonal zueinander sind.

8. Fahrzeugsitz nach einem der Ansprüche 1 bis 7, wobei eine Vielzahl von Falten (36, 236a, 236b, 236c) ausgebildet ist.

9. Fahrzeugsitz nach einem der Ansprüche 1 bis 8, wobei die Seitenairbagvorrichtung an einem Seitenteil des Fahrzeugsitzes auf einer Seite gegenüber einer Fahrzeugtür vorgesehen ist.

## Revendications

1. Siège de véhicule incluant un dispositif de coussin de sécurité gonflable latéral, comprenant :
un coussin de sécurité gonflable (33, 133, 233) qui retient un occupant en se déployant à partir d'une partie latérale du siège ; et
une attache externe (34, 134) s'étendant dans une direction verticale du coussin de sécurité gonflable (33, 133, 233) sur une surface externe du coussin de sécurité gonflable (33, 133, 233) sur un côté occupant ; dans lequel :
l'attache externe (34, 134) est configurée de façon à commander la longueur de déploiement dans la direction verticale du coussin de sécurité gonflable (33, 133, 233), et
un plissage (36, 236a, 236b, 236c) formé en pliant une portion de matériau de base formant le coussin de sécurité gonflable (33, 133, 233) est fourni sur une surface de la portion de matériau de base sur un côté opposé à l'occupant, dans lequel
l'attache externe (34, 134) a une partie d'extrémité supérieure (34a) connectée à une partie supérieure du coussin de sécurité gonflable (33, 133, 233) et une partie d'extrémité inférieure (34b) connectée à une partie inférieure du coussin de sécurité gonflable (33, 133, 233),
**caractérisé en ce que**
la partie d'extrémité supérieure (34a) de l'attache externe (34, 134) est fournie pour inclure une partie de coin (33c) entre le bord avant et le bord supérieur du coussin de sécurité gonflable (33, 133, 233), et la partie d'extrémité inférieure (34b) de l'attache externe (34, 134) est fixée à l'armature de siège du siège au voisinage d'un gonfleur qui est à l'intérieur du coussin de sécurité gonflable (33, 133, 233).

2. Siège de véhicule selon la revendication 1, dans lequel le pli formant le plissage (36, 236a, 236b, 236c) s'étend dans une direction orthogonale à la direction verticale.

3. Siège de véhicule selon la revendication 2, dans lequel la direction longitudinale de l'attache externe (34, 134) et la direction dans laquelle le pli du plissage (36, 236a, 236b, 236c) s'étend sont fournies sensiblement orthogonales l'une par rapport à l'autre.

4. Siège de véhicule selon l'une quelconque des revendications 1 à 3, dans lequel l'attache externe (34, 134) est agencée de façon à venir en contact avec l'occupant pendant un déploiement du coussin de sécurité gonflable (33, 133, 233).

5. Siège de véhicule selon l'une quelconque des revendications 1 à 4, dans lequel une attache interne (38U, 38L, 138U, 138L) qui commande la largeur de déploiement du coussin de sécurité gonflable (33, 133, 233) dans la direction gauche-droite est fournie à l'intérieur du coussin de sécurité gonflable (33, 133, 233).

6. Siège de véhicule selon la revendication 5, dans lequel :
deux des attaches internes (38U, 38L, 138U, 138L) sont agencées à un intervalle prédéterminé dans la direction verticale, et
le plissage (36, 236a, 236b, 236c) est formé à une position appropriée entre les deux attaches internes (38U, 38L, 138U, 138L).

7. Siège de véhicule selon la revendication 5 ou 6, dans lequel l'attache interne et l'attache externe (34, 134) s'étendent dans des directions sensiblement orthogonales l'une par rapport à l'autre.

8. Siège de véhicule selon l'une quelconque des revendications 1 à 7, dans lequel une pluralité des plissages (36, 236a, 236b, 236c) sont formés.

9. Siège de véhicule selon l'une quelconque des revendications 1 à 8, dans lequel le dispositif de coussin de sécurité gonflable latéral est fourni sur une partie latérale du siège de véhicule sur un côté opposé à une portière de véhicule.
